# EUROPEAN PATENT APPLICATION

(11) **EP 4 813 736 A1**
(43) Date of publication of application: **30.09.2026**
(21) Application number: 24899521.9
(22) Date of filing: 29.10.2024
(51) Int. Cl.: B60L 58/40, B60L 50/75

(54) **FUEL CELL VEHICLE, AND ROUND-THE-CLOCK MONITORING SYSTEM FOR HYDROGEN SYSTEM OF FUEL CELL VEHICLE**

(30) Priority: 04.12.2023 CN 202311652039
(71) Applicant: Yutong Bus Co., Ltd., Zhengzhou, Henan 450061 (CN)
(72) Inventor: LI, Jiangchuan, Zhengzhou, Henan 450061 (CN); CAO, Kuan, Zhengzhou, Henan 450061 (CN); ZHAO, Xinwen, Zhengzhou, Henan 450061 (CN); YU, Yangyang, Zhengzhou, Henan 450061 (CN); YUAN, Tian, Zhengzhou, Henan 450061 (CN); ZHAO, Yaxin, Zhengzhou, Henan 450061 (CN)
(74) Representative: Gulde & Partner
(86) International application number: PCT/CN2024/128089
(87) International publication number: WO 2025/118878

(57) **Abstract**

The present invention relates to the field of new energy technologies, and specifically, to a fuel cell vehicle and a round-the-clock monitoring system for a hydrogen system of the fuel cell vehicle. To solve the problem in the existing technology that when the vehicle is powered off, a power battery supplies power to the hydrogen system round the clock, so that low voltage electrical systems are all energized, and consequently, the power battery has high power consumption. In the present invention, power is supplied to a monitoring unit through two different power supply lines, and a first anti-reverse diode is arranged in series in a power supply line through which the vehicle low voltage power supply module supplies power to the monitoring unit, so that the vehicle low voltage power supply module can only supply power to the monitoring unit unidirectionally, which prevents the vehicle low voltage electrical systems from being all energized during power supplying by a power battery power supply module of the vehicle, reduces the power consumption of the power battery power supply module serving as a power supply, prolongs the long-term parking safety, and ensures the safety of the vehicle in a parked and powered-off monitoring state.

## Description

### TECHNICAL FIELD

The present invention relates to the field of new energy technologies, and specifically, to a fuel cell vehicle and a round-the-clock monitoring system for a hydrogen system of the fuel cell vehicle.

### BACKGROUND

At present, a hydrogen for a fuel cell vehicle is still stored in a high pressure hydrogen cylinder. When the vehicle is in a normal powered-on state, data can be acquired by a hydrogen system through a concentration sensor, a temperature sensor, and a pressure sensor in a signal acquisition system, to monitor a safety state of hydrogen of the vehicle. However, in a parked and powered-off state of the vehicle, a hydrogen signal acquisition system in a high pressure hydrogen cylinder is in a powered-off state, and the hydrogen system cannot monitor the safety state of the hydrogen of the vehicle, which poses a potential safety hazard. For a current conventional hydrogen monitoring manner and strategy, an abnormal condition of the vehicle when the vehicle is in the parked and powered-off state cannot be monitored, so that after leakage occurs, hydrogen may continue to leak, and may even cause serious safety accidents such as fire and explosion.

Chinese patent application with the publication No. CN115257468A discloses a round-the-clock monitoring method and system for an on-board hydrogen system. In a case where a vehicle is powered off, a voltage of a vehicle power battery is converted into a set voltage to supply power to a related control unit of the on-board hydrogen system, so as to obtain state information sent by the control unit of the hydrogen system. In this way, round-the-clock monitoring and power supply are enabled when the vehicle is in a parked and powered-off state, which may lead to energization of vehicle low voltage electrical systems, resulting in relatively high power consumption of the power battery and posing a potential safety hazard. In addition, in this way, power is supplied to a hydrogen system monitoring unit and a hydrogen supply unit at the same time. If a hydrogen system controller is abnormal, there is a potential safety hazard of uncontrolled enabling of hydrogen supply.

### SUMMARY

An objective of the present invention is to provide a fuel cell vehicle and a round-the-clock monitoring system for a hydrogen system of the fuel cell vehicle, to solve a problem in the prior art that when the vehicle is powered off, a power battery supplies power to the hydrogen system round the clock, so that low voltage electrical systems are all energized, which leads to high power consumption of the power battery.

To solve the foregoing technical problem, the present invention provides a round-the-clock monitoring system for a hydrogen system of a fuel cell vehicle. The system includes a power battery power supply module, a vehicle low voltage power supply module, and a hydrogen system controller. The vehicle low voltage power supply module is configured to supply power to the hydrogen system controller when the vehicle is normally powered on for driving. The power battery power supply module is configured to supply power to the hydrogen system controller through power battery when the vehicle low voltage power supply module is incapable of supplying power to the hydrogen system controller. The hydrogen system controller comprises a monitoring unit, the monitoring unit is configured to obtain monitored hydrogen parameter information. Both the power battery power supply module and the vehicle low voltage power supply module are electrically connected to the monitoring unit for supplying power thereto. A first anti-reverse diode is connected in series in a power supply line between the vehicle low voltage power supply module and the monitoring unit.

Beneficial effects are as follows: To solve problem in the prior art that when the vehicle is powered off, the power battery supplies power to the hydrogen system round the clock, so that the low voltage electrical systems are all energized, and consequently, the power battery has high power consumption. In the present invention, the power is supplied to the monitoring unit through two different power supply lines, and the first anti-reverse diode is arranged in series in the power supply line through which the vehicle low voltage power supply module supplies power to the monitoring unit, so that the vehicle low voltage power supply module can only supply power to the monitoring unit unidirectionally, which prevents the vehicle low voltage electrical systems from being all energized during power supplying by the power battery power supply module of the vehicle, reduces the power consumption of the power battery power supply module serving as a power supply, prolongs the long-term parking safety, and ensures the safety of the system in a parked and powered-off monitoring state of the vehicle.

The system further includes a first switch, and the hydrogen system controller further includes a second switch. Both the first switch and the second switch are connected in series in a power supply line through which the vehicle low voltage power supply module supplies power to a cylinder valve solenoid valve.

Beneficial effects are as follows: In a normal powered-on state of the vehicle, the cylinder valve solenoid valve of a hydrogen cylinder is controlled to be opened or closed based on a hydrogen demand, to prevent a situation that the cylinder valve solenoid valve is abnormally controlled to be opened in a parked and powered-off state of the vehicle, thus enhancing the safety of the system.

Further, a second anti-reverse diode is connected in series in a power supply line between the power battery power supply module and the monitoring unit.

Beneficial effects are as follows: It is ensured that a power supply direction can only be from the power battery power supply module to the monitoring unit, thereby avoiding that a current flows from the monitoring unit to the power battery power supply module when the vehicle is normally powered on, and further ensuring the safety of the vehicle monitoring system.

Further, the hydrogen parameter information includes a temperature, a high pressure, a low pressure, and a concentration of hydrogen.

Beneficial effects are as follows: it is conducive to accurately obtaining a state of hydrogen in the hydrogen cylinder based on the foregoing parameters, thereby effectively reducing an occurrence probability of a potential safety hazard of the hydrogen system and enhancing the safety and stability of the system.

Further, the power battery power supply module is configured to periodically supply power to the monitoring unit or continuously supply power to the monitoring unit.

Beneficial effects are as follows: While meeting a monitoring requirement, it further reduces the power consumption of the power battery, prolongs the long-term parking safety of the vehicle, and enhances the safety and stability of the system.

To solve the foregoing technical problem, the present invention further provides a fuel cell vehicle, the fuel cell vehicle includes a monitoring system for monitoring a state of a hydrogen system of the vehicle. The system includes a power battery power supply module, a vehicle low voltage power supply module, and a hydrogen system controller. The vehicle low voltage power supply module is configured to supply power to the hydrogen system controller when the vehicle is normally powered on for driving. The power battery power supply module is configured to supply power to the hydrogen system controller using the power battery when the vehicle low voltage power supply module is incapable of supplying power to the hydrogen system controller. The hydrogen system controller comprises a monitoring unit. The monitoring unit is configured to obtain monitored hydrogen parameter information. Both the power battery power supply module and the vehicle low voltage power supply module are electrically connected to the monitoring unit for supplying power thereto. A first anti-reverse diode is connected in series in a power supply line between the vehicle low voltage power supply module and the monitoring unit.

Beneficial effects are as follows: The power is supplied to the monitoring unit through two different power supply lines on the vehicle, and the first anti-reverse diode is arranged in series in the power supply line through which the vehicle low voltage power supply module supplies power to the monitoring unit, so that the power can only be unidirectionally inputted to the monitoring unit, which prevents the low voltage electrical systems from being all energized, reduces the power consumption of a power battery serving as a power supply, prolongs the long term parking safety, and ensures the safety in a parked and powered-off monitoring state of the vehicle.

Further, the system includes a first switch. The hydrogen system controller includes a second switch. Both the first switch and the second switch are connected in series in a power supply line through which the vehicle low voltage power supply module supplies power to a cylinder valve solenoid valve.

Beneficial effects are as follows: In a normal powered-on state of the vehicle, the cylinder valve solenoid valve of a hydrogen cylinder is controlled to be opened or closed based on a hydrogen demand, to prevent a situation that the cylinder valve solenoid valve is abnormally controlled to be opened in a parked and powered-off state of the vehicle, thus enhancing the safety of the vehicle.

Further, a second anti-reverse diode is connected in series in a power supply line between the power battery power supply module and the monitoring unit.

Beneficial effects are as follows: It is ensured that a power supply direction can only be from the power battery power supply module to the monitoring unit, thereby avoiding that a current flows from the monitoring unit to the power battery power supply module when the vehicle is normally powered on, and further ensuring the safety of the vehicle monitoring system.

Further, the hydrogen parameter information includes a temperature, a high pressure, a low pressure, and a concentration of hydrogen.

Beneficial effects are as follows: it is conducive to accurately obtaining a state of hydrogen in the hydrogen cylinder based on the foregoing parameters, thereby effectively reducing an occurrence probability of a potential safety hazard of the hydrogen system and enhancing the safety and stability of the vehicle.

Further, the power battery power supply module is configured to periodically supply power to the monitoring unit or continuously supply power to the monitoring unit.

Beneficial effects are as follows: While meeting a monitoring requirement, it further reduces the power consumption of the power battery, prolongs the long-term parking safety of the vehicle, and enhances the safety and stability of the vehicle.

### BRIEF DESCRIPTION OF THE DRAWINGS

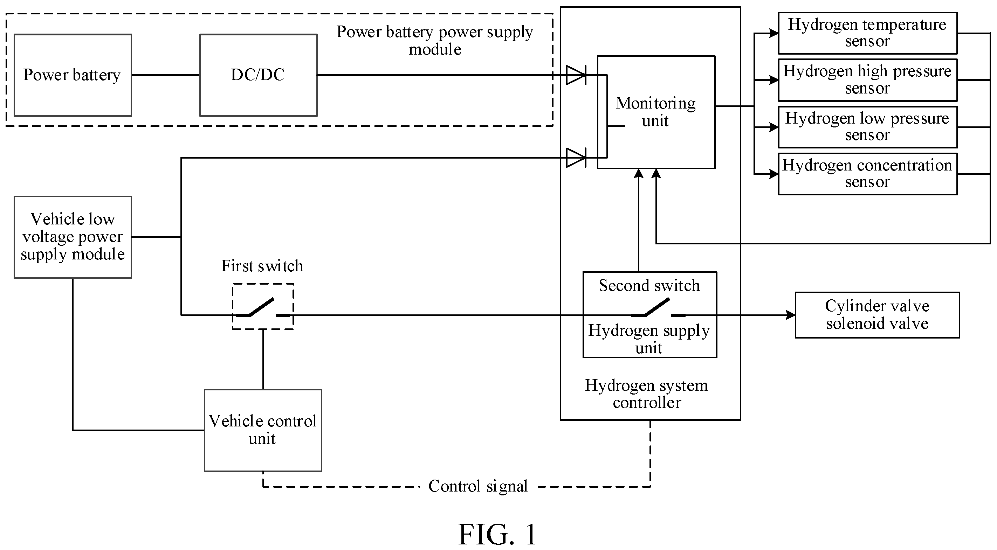

FIG. 1 is a round-the-clock monitoring system for a hydrogen system according to an embodiment of the present invention.

### DETAILED DESCRIPTION

The basic concept of the present invention: In the present invention, a monitoring unit in a hydrogen system controller is provided with power by two power supply lines, and the two power supply lines cannot supply power to each other, so that during round-the-clock data acquisition performed by the monitoring unit, low voltage electrical systems cannot be all energized. The principle of the present invention is as follows: when a vehicle is normally powered on for driving, the monitoring unit of the hydrogen system controller is provided with power through a vehicle low voltage power supply, so that the monitoring unit obtains acquired data. When the vehicle is in a powered-off state, a power battery power supply module supplies power to the monitoring unit of the hydrogen system controller, so that the monitoring unit obtains the acquired data. In addition, a first anti-reverse diode is arranged in series in a power supply line through which the vehicle low voltage power supply supplies power to the monitoring unit, to prevent other low voltage appliances of the vehicle from being abnormally energized when the power battery power supply module supplies power to the monitoring unit. Based on this concept, a fuel cell vehicle and a round-the-clock monitoring system for a hydrogen system of the fuel cell vehicle in the present invention can be implemented.

The following describes the present invention in detail with reference to the accompanying drawing and method embodiments.

### Embodiment 1 of the round-the-clock monitoring system for the hydrogen system of the fuel cell vehicle:

FIG. 1 shows a schematic diagram of a structure of a round-the-clock monitoring system for a hydrogen system of a fuel cell vehicle. The system includes a power battery power supply module, a vehicle low voltage power supply module, a vehicle control unit, a first switch, and a hydrogen system controller. The power battery power supply module includes a power battery and a direct current/direct current converter (DC/DC). The hydrogen system controller includes a monitoring unit and a hydrogen supply unit. The hydrogen supply unit is a second switch.

The power battery is configured to supply power to the monitoring unit through the DC/DC when the vehicle is parked and powered off. The vehicle low voltage power supply module is configured to supply power to the monitoring unit when the vehicle is normally powered on, is further configured to supply power to a cylinder valve solenoid valve through the first switch and the hydrogen supply unit, and is further configured to supply power to the vehicle control unit. The monitoring unit is configured to obtain acquired hydrogen data. The hydrogen supply unit is configured to implement turning on/turning off of a power supply line between the vehicle low voltage power supply module and the cylinder valve solenoid valve. The monitoring unit is further configured to obtain an on or off state of the hydrogen supply unit.

A specific control process of the system for the round-the-clock monitoring on the hydrogen of the fuel cell vehicle is as follows:
1) When the vehicle is normally powered on for driving:
   The vehicle low voltage power supply module supplies power to the monitoring unit in the hydrogen system controller, and the monitoring unit is powered on to obtain acquired hydrogen-related parameter data. A unidirectional diode having an anti-reverse function (that is, a first anti-reverse diode) is disposed between the vehicle low voltage power supply module and the monitoring unit, to ensure that a power supply direction can only be from the vehicle low voltage power supply module to the monitoring unit, thereby avoiding a situation that a current flows from the monitoring unit to the vehicle low voltage power supply module when the vehicle low voltage power supply module no longer supplies power to the monitoring unit, leading to abnormal energization of low voltage appliances.
2) When the vehicle is parked and powered off:
   The power battery is activated, and the DC/DC is used to convert high voltage power of the power battery into low voltage power, to supply the power to the monitoring unit in the hydrogen system controller. The monitoring unit is powered on to obtain the acquired hydrogen-related parameter data. The power battery can be set to periodically supply power or supply power continuously for 24 hours. A unidirectional diode having an anti-reverse function (that is, a second anti-reverse diode) is disposed between the power battery power supply module and the monitoring unit, to ensure that a power supply direction can only be from the power battery to the monitoring unit and avoid a situation that a current flows from the monitoring unit to the DC/DC when the vehicle is normally powered on.

In this embodiment, the hydrogen data obtained by the monitoring unit includes a temperature, a high pressure, a low pressure, and a concentration of hydrogen, and corresponding data acquisition is performed respectively through a hydrogen temperature sensor, a hydrogen high pressure sensor, a hydrogen low pressure sensor, and a hydrogen concentration sensor in FIG. 1.

In the present invention, the diodes allowing only unidirectional power transmission are disposed respectively between the power battery power supply module and the monitoring unit, and between the vehicle low voltage power supply module and the monitoring unit, so as to avoid abnormal energization of other low voltage appliances of the vehicle in two power supply states, reduce the power consumption of the power battery, and prolong the long-term parking safety.

### Embodiment 2 of the round-the-clock monitoring system for the hydrogen system of the fuel cell vehicle:

FIG. 1 shows a schematic diagram of a structure of a round-the-clock monitoring system for a hydrogen system of a fuel cell vehicle. The system includes a power battery power supply module, a vehicle low voltage power supply module, a vehicle control unit, a first switch, and a hydrogen system controller. The power battery power supply module includes a power battery and a direct current/direct current converter (DC/DC). The hydrogen system controller includes a monitoring unit and a hydrogen supply unit. The hydrogen supply unit is a second switch.

The power battery is configured to supply power to the monitoring unit through the DC/DC when the vehicle is parked and powered off. The vehicle low voltage power supply module is configured to supply power to the monitoring unit when the vehicle is normally powered on, is further configured to supply power to a cylinder valve solenoid valve through the first switch and the hydrogen supply unit, and is further configured to supply power to the vehicle control unit. The monitoring unit is configured to obtain acquired hydrogen data. The hydrogen supply unit is configured to implement turning on/turning off of a power supply line between the vehicle low voltage power supply module and the cylinder valve solenoid valve. The monitoring unit is further configured to obtain an on or off state of the hydrogen supply unit. Moreover, in this embodiment, the first switch is controlled by the vehicle control unit, and the vehicle control unit can exchange data with the hydrogen system controller.

The system solves, by using the following control manners, a problem of a potential safety hazard caused by uncontrolled enabling of hydrogen supplying due to an abnormality of the hydrogen system controller when the vehicle is powered off:
(1) When the vehicle drives normally:
   The vehicle low voltage power supply module supplies power to the vehicle control unit through a line. When there is a hydrogen supply demand, the vehicle control unit controls the first switch on this line to be closed and sends a control signal to the hydrogen system controller. The hydrogen system controller controls the hydrogen supply unit (that is, the second switch) inside the hydrogen system controller to be closed. In this case, the vehicle low voltage power supply module supplies power to the cylinder valve solenoid valve through the first switch and the second switch.
(2) When the vehicle is in a powered-off state:
   The vehicle control unit is powered off, so that it cannot control the first switch to be closed, and cannot send a control signal to the hydrogen system controller to control the second switch to be closed, so that the cylinder valve solenoid valve of a hydrogen cylinder cannot be opened in the powered-off state of the vehicle.

In the present invention, in the powered-off state, the hydrogen cylinder power supply line of the hydrogen system of the vehicle is always in an off state and hydrogen cannot be supplied. Even if the hydrogen system controller is abnormal when the vehicle is in the powered-off monitoring state, power cannot be supplied to the cylinder valve solenoid valve of the hydrogen cylinder, thereby ensuring the safety in the parked and powered-off monitoring state of the vehicle.

### Embodiment of the fuel cell vehicle:

The present invention provides a fuel cell vehicle. The vehicle can detect hydrogen-related parameters during normal operation and in a parked and powered-off state, and other low voltage appliances of the vehicle are not abnormally energized. In addition, in the parked and powered-off state, power cannot be supplied to the cylinder valve solenoid valve of the hydrogen cylinder, thereby ensuring the safety in the parked and powered-off monitoring state of the vehicle. The specific control principle thereof is described in detail in Embodiment 1 of the round-the-clock monitoring system for the hydrogen system of the fuel cell vehicle and Embodiment 2 of the round-the-clock monitoring system for the hydrogen system of the fuel cell vehicle. Details will not be described herein.

## Claims

1. A round-the-clock monitoring system for a hydrogen system of a fuel cell vehicle, wherein the system comprises a power battery power supply module, a vehicle low voltage power supply module, and a hydrogen system controller; the vehicle low voltage power supply module is configured to supply power to the hydrogen system controller when the vehicle is normally powered on for driving; the power battery power supply module is configured to supply power to the hydrogen system controller using the power battery when the vehicle low voltage power supply module is incapable of supplying power to the hydrogen system controller; the hydrogen system controller comprises a monitoring unit; the monitoring unit is configured to obtain monitored hydrogen parameter information; both the power battery power supply module and the vehicle low voltage power supply module are electrically connected to the monitoring unit for supplying power thereto; and a first anti-reverse diode is connected in series in a power supply line between the vehicle low voltage power supply module and the monitoring unit.

2. The round-the-clock monitoring system for the hydrogen system of the fuel cell vehicle according to claim 1, wherein the system further comprises a first switch, and the hydrogen system controller further comprises a second switch; and both the first switch and the second switch are connected in series in a power supply line through which the vehicle low voltage power supply module supplies power to a cylinder valve solenoid valve.

3. The round-the-clock monitoring system for the hydrogen system of the fuel cell vehicle according to claim 1, wherein a second anti-reverse diode is connected in series in a power supply line between the power battery power supply module and the monitoring unit.

4. The round-the-clock monitoring system for the hydrogen system of the fuel cell vehicle according to claim 1, wherein the hydrogen parameter information comprises a temperature, a high pressure, a low pressure, and a concentration of hydrogen.

5. The round-the-clock monitoring system for the hydrogen system of the fuel cell vehicle according to any one of claims 1 to 4, wherein the power battery power supply module is configured to periodically supply power to the monitoring unit or continuously supply power to the monitoring unit.

6. A fuel cell vehicle, comprising a monitoring system for monitoring a state of a hydrogen system of a vehicle, wherein the system comprises a power battery power supply module, a vehicle low voltage power supply module, and a hydrogen system controller; the vehicle low voltage power supply module is configured to supply power to the hydrogen system controller when the vehicle is normally powered on for driving; the power battery power supply module is configured to supply power to the hydrogen system controller using the power battery when the vehicle low voltage power supply module is incapable of supplying power to the hydrogen system controller; the hydrogen system controller comprises a monitoring unit; the monitoring unit is configured to obtain monitored hydrogen parameter information; both the power battery power supply module and the vehicle low voltage power supply module are electrically connected to the monitoring unit for supplying power thereto; and a first anti-reverse diode is connected in series in a power supply line between the vehicle low voltage power supply module and the monitoring unit.

7. The fuel cell vehicle according to claim 6, wherein the system further comprises a first switch, and the hydrogen system controller further comprises a second switch; and both the first switch and the second switch are connected in series in a power supply line through which the vehicle low voltage power supply module supplies power to a cylinder valve solenoid valve.

8. The fuel cell vehicle according to claim 6, wherein a second anti-reverse diode is connected in series in a power supply line between the power battery power supply module and the monitoring unit.

9. The fuel cell vehicle according to claim 6, wherein the hydrogen parameter information comprises a temperature, a high pressure, a low pressure, and a concentration of hydrogen.

10. The fuel cell vehicle according to any one of claims 6 to 9, wherein the power battery power supply module is configured to periodically supply power to the monitoring unit or continuously supply power to the monitoring unit.
